# EUROPÄISCHE PATENTSCHRIFT

(11) **EP 3 744 753 B1**
(45) Veröffentlichungstag und Bekanntmachung des Hinweises auf die Patenterteilung: **06.04.2022**
(21) Anmeldenummer: 19176868.8
(22) Anmeldetag: 28.05.2019
(51) Int. Cl.: C08G 77/14, C08G 77/34, C08L 83/06

(54) **VERFAHREN ZUR AUFREINIGUNG VON ACETOXYSILOXANEN**
METHOD FOR PURIFYING ACETOXY SILOXANES
PROCÉDÉ DE PURIFICATION D'ACÉTOXYSILOXANES

(43) Veröffentlichungstag der Anmeldung: 02.12.2020
(73) Patentinhaber: Evonik Operations GmbH, 45128 Essen (DE)
(72) Erfinder: KNOTT, Wilfried, 45355 Essen (DE); WINDBIEL, Dagmar, 45289 Essen (DE); DUDZIK, Horst, 45326 Essen (DE); HENNING, Frauke, 45259 Essen (DE); CASSENS, Jan, 45711 Datteln (DE)
(74) Vertreter: Evonik Patent Association

(56) Entgegenhaltungen:
- CA-A- 1 125 780
- US-A- 4 066 680

## Beschreibung

Die Erfindung betrifft ein Verfahren zur Aufreinigung von Acetoxysiloxanen, die so gewonnenen aufgereinigten Acetoxysiloxane, sowie deren Verwendung als Ausgangsmaterialien zur Herstellung SiOC-verknüpfter Polyethersiloxane Bezugnehmend auf die EP 3467006A1 und EP 3492513 A1, die sich der Herstellung SiOC-verknüpfter Polyethersiloxane widmen, wobei als reaktive Zwischenstufen trifluormethansulfonsaure, äquilibrierte Acetoxysiloxane des linearen bzw. auch des verzweigten Strukturtyps verwendet werden, stellt die Lehre der Patentschrift EP3611215 A1 auf ein Verfahren zur Herstellung trifluormethansulfonsaurer, endäquilibrierter, Acetoxygruppen-tragender Siloxane ab, bei welchem man zyklische Siloxane, insbesondere umfassend D₄ und/oder D₅, und/oder Mischungen zyklisch-verzweigter Siloxane vom D/T-Typ unter Einsatz von Trifluormethansulfonsäure als Katalysator mit Acetanhydrid und unter Zusatz von Essigsäure umsetzt.

Die EP3611216 A1, EP3611214 A1 und EP3492513 A1 stellen auf Verfahren zur Herstellung von Acetoxy-modifizierten Siloxanen ab, bei denen DT-Siloxancyclen respektive einfache, nur D-Einheiten enthaltende Siloxancyclen als Edukte eingesetzt werden.

Die EP 3492513 A1 bezieht sich auf ein Verfahren zur Herstellung von im Siloxanteil verzweigten, SiOC-verknüpften Polyethersiloxanen ausgehend von Mischungen zyklisch-verzweigter Siloxane vom D/T-Typ, indem man in einem ersten Schritt zyklische-verzweigte Siloxane vom D/T-Typ säurekatalysiert mit Acetanhydrid ggf. in Abmischung mit einfachen Siloxanzyklen zu Acetoxygruppen-tragenden, verzweigten Siloxanen umsetzt und in einem zweiten Schritt die Äquilibrierung des Acetoxy-modifizierten verzweigten Siloxans mit Trifluormethansulfonsäure durchführt und in einem dritten Schritt das trifluormethansulfonsaure Acetoxysiloxan ggf. in Gegenwart von Basen und ggf. in Gegenwart eines inerten Lösungsmittels mit Polyetherolen umsetzt. Das hierbei gewonnene, verzweigte Acetoxysiloxan enthält pro Mol Si-gebundener Acetoxyfunktion neben eingesetzter Trifluormethansulfonsäure auch noch etwa 0,10 Mol freien Essigsäureanhydrids.

Keine verzweigten, sondern lineare SiOC-verknüpfte Silikonpolyetherstrukturen anstrebend, führen die EP3611216 A1 und EP3611214 A1 hierzu aus, dass äquilibrierte α,ω-Diacetoxy-polydimethylsiloxane durch die Umsetzung von Siloxancyclen (D₄/D₅) mit Acetanhydrid in Gegenwart von Trifluormethansulfonsäure hergestellt werden, indem man unter guter Durchmischung der Reaktanden diese mit 0,1 bis 0,3 Massenprozent Trifluormethansulfonsäure bezogen auf die gesamte Reaktionsmasse beaufschlägt und dann auf Temperaturen von 140 bis 160°C für die Dauer von 4 bis 8 Stunden erhitzt. Hierbei wird aus der anfänglich leicht trüben Reaktionsmischung ein klares, äquilibriertes trifluormethansulfonsaures α,ω-Diacetoxypolydimethylsiloxan erhalten, das neben eingesetzter Trifluormethansulfonsäure auch 0,125 Mol freien Acetanhydrids bezogen auf das im α,ω-Diacetoxypolydimethylsiloxan chemisch gebundene Acetanhydrid-Äquivalent, enthält.

Die Patentschrift EP3663346 A1 beschreibt (i) Reaktionssysteme zur Herstellung Acetoxyfunktionen tragender Siloxane, umfassend a) Alkoxygruppen tragende Silane und/oder Siloxane und/oder b) Acetoxygruppen tragende Silane und/oder Siloxane, c) Hydroxygruppen tragende Silane und/oder Siloxane c) ggf. einfache Siloxanzyklen und/oder DT-Zyklen, d) ein Reaktionsmedium, umfassend Essigsäureanhydrid, Perfluoralkansulfonsäure sowie vorzugsweise Essigsäure, (ii) ein Verfahren zur Herstellung linearer oder verzweigter Acetoxyfunktionen tragender Siloxane sowie deren Verwendung zur Herstellung von Polyethersiloxanen und zählt ebenfalls vollumfänglich zum Offenbarungsgehalt dieser Anmeldung.

Gemäß oben bezeichneter Anmeldung ist es z.B. möglich, zu einem terminale Acetoxygruppen tragenden, verzweigten Siloxan zu gelangen, indem man ein terminale Alkoxygruppen tragendes, verzweigtes Silikonäquilibrat (=Voräquilibrat) als alleinigen Reaktanden mit einem Reaktionsmedium bestehend aus Essigsäureanhydrid, Trifluormethansulfonsäure und Essigsäure zur Umsetzung bringt.

Alternativ führt die EP3663346 A1 im Sinne einer weiteren bevorzugten Ausführungsform aus, dass man auch alle Reaktanden und/ oder Kombinationen derselben von Beginn an direkt mit dem Reaktionsmedium unter guter Durchmischung vorlegen und dann durch Erhitzen und Entfernen flüchtiger Nebenprodukte zur Umsetzung bringen kann, aus der dann direkt ein terminale Acetoxygruppen tragendes, verzweigtes Siloxan hervorgeht.

Der Lehre der EP3663346 A1 folgend, kann es abhängig von der angestrebten Struktur des terminale Acetoxygruppen tragenden Siloxans vorteilhaft sein, ein sequenziertes Vorgehen, das heißt, unter Nutzung eines Voräquilibrats, oder aber ein konzertiertes Vorgehen (unter Vorlage aller Reaktanden und/oder Kombinationen derselben von Anfang an) zu wählen.

In der betrieblichen Praxis möchte man unabhängig von teurer und zum Teil zeitaufwendiger apparativer Analytik (wie z.B. ¹H-, ¹³C- und ²⁹Si-NMR-Spektroskopie) den Gehalt aktiver, Silizium gebundener Gruppen schnell nasschemisch bestimmen können, um eine verlässliche Kalkulationsbasis für die stöchiometrische Berechnung der Produktionschargen zu haben. Die Präsenz von Trifluormethansulfonsäure und Essigsäureanhydrid in den gemäß EP3492513 A1 oder EP3611214 A1, EP3611216 A1 und EP3663346 A1 gewonnenen reaktiven Acetoxysiloxanvorstufen bzw. die Präsenz von Trifluormethansulfonsäure, Essigsäureanhydrid und Essigsäure gemäß EP3611215 A1 erschwert die titrimetrische Gehaltsbestimmung der am Silizium gebundenen Acetoxygruppen erheblich, da man diese stets neben dem in der Matrix vorhandenen Essigsäureanhydrid bzw. neben Essigsäureanhydrid und Essigsäure bestimmen muss. Zur Erfassung individueller Acetoxyspezies innerhalb der komplexen stofflichen Matrix sind somit Doppel- oder Mehrfachtitrationen unvermeidbar.

Von besonderer Bedeutung ist die verlässliche Kalkulationsbasis für die stöchiometrische Berechnung der Produktionschargen, insbesondere in Hinblick auf die Herstellung von SiOC-verknüpften, linearen Polydimethylsiloxan-Polyoxyalkylen-Blockcopolymeren mit sich wiederholenden (AB)-Einheiten. In der Patentschrift EP3611214 A1, die sich auf ein Verfahren zur Herstellung dieser Polydimethylsiloxan-Polyoxyalkylen-Blockcopolymeren bezieht, wird ausgeführt, dass man das molare Verhältnis von α,ω-Diacetoxysiloxanen zu Polyetherdiolen vorzugsweise im Bereich von 0,90 bis 1,10, bevorzugt im Bereich 0,95 bis 1,05, besonders bevorzugt im Bereich 0,99 bis 1,01 wählen sollte, da sich der erzielbare Polymerisationsgrad direkt an die Einhaltung einer nahezu perfekten Stöchiometrie der Reaktanden knüpft.

Als weiteren Aspekt führt die EP3492513 A1 im Hinblick auf die Weiterverarbeitung der trifluormethansulfonsauren, noch Acetanhydrid enthaltenden verzweigten Acetoxysiloxane an, dass die zu einem späteren Zeitpunkt vorgenommene Neutralisation der im Reaktionssystem vorhandenen Säure - und da insbesondere nach der thermischen Abtrennung entstandener Essigsäure, restlichen Acetanhydrids und ggf. eingesetzten Lösungsmittels, zu einer partiellen Veresterung des im System befindlichen Polyetherols mit Essigsäure führt. Die längere Einwirkdauer der im System vorhandenen Trifluormethansulfonsäure bringt zudem erfahrungsgemäß häufig stärker verfärbte Produkte hervor. (Beispiel 3, ibid.).

Man erhält nach destillativer Entfernung der Essigsäure eine Zubereitung, die aus einem SiOC-verknüpften verzweigten Siliconpolyether nebst einem Polyetherol und einem Acetylgruppen endverschlossenen Polyetherol besteht. Solche Zubereitungen mit reduzierter Hydroxyfunktionalität sind für spezielle Anwendungen von Interesse, aber nicht für die Breite möglicher Applikationen.

Überraschenderweise wurde nun gefunden, dass man sowohl die in den verzweigten (vgl. EP3492513 A1) als auch den linearen Acetoxysiloxanen (vgl. EP3611214 A1 und EP3611216 A1) vorhandenen Anteile an Supersäure, insbesondere Trifluormethansulfonsäure, als auch Acetanhydrids bzw. auch Trifluormethansulfonsäure, Essigsäureanhydrid und Essigsäure gemäß EP3611215 A1 einfach entfernen kann und somit zu aufgereinigten Acetoxysiloxanen gelangt, die sowohl den titrimetrischen Bestimmungsaufwand als auch den Aufwand zur Vermeidung acetylierter Polyetherole reduzieren.

US4066680 A offenbart ein Verfahren zur Herstellung von α,ω-Siloxanediolen aus α,ω-Diacetoxysiloxanen als Zwischenprodukt. Die α,ω-Diacetoxysiloxane werden durch Reaktion cyclischer Siloxane, Acetatanhydrid, Essigsäure und säureaktivierten Tons unter Rückfluss hergestellt.

CA1125780 A offenbart ein Verfahren zur Herstellung von α,ω-Diacetoxysiloxanen durch Reaktion cyclischer Siloxane, Acetatanhydrid, Essigsäure und säureaktivierten Tons unter Rückfluss.

Darüber hinaus wurde nun überraschend gefunden, dass sich die erfindungsgemäß aufgereinigten Acetoxysiloxane durch Destillation bevorzugt unter Anlegen eines Hilfsvakuums leicht von freien einfachen Siloxancyclen (umfassend D₄/D₅/D₆) befreien lassen, ohne dass es zur Bildung unerwünschter Verunreinigungen und insbesondere auch nicht zum Auftreten einer sogenannten Back-Biting-Reaktion kommt, aus der sonst wieder zyklische Siloxane hervorgehen. Die hier erfindungsgemäß gefundene Möglichkeit zur Zyklenabtrennung auf der Stufe des Reaktivsiloxans (Acetoxysiloxans) ist von großer technischer Bedeutung, da der Markt zunehmend nach VOC-freien (Volatile Organic Compound), organomodifizierten Silikonadditiven verlangt, andererseits die thermische Abtrennung von Siloxancyclen aus dem Finalprodukt jedoch dadurch erschwert ist, dass die auf der Stufe des organomodifizierten Siloxans destillativ abgetrennten Cyclen stets wechselnde Anteile organischen Mitrisses enthalten, so dass man diese danach nur begrenzt zur Synthese von Siloxangrundkörpern wiedereinsetzen kann. Zudem birgt die thermische Belastung des SiOC-strukturierten Polyethersiloxans stets die erhöhte Gefahr von unerwünschten Produktverfärbungen.

Das Dilemma, das sich aus den Erfordernissen der Produktqualität auf der einen Seite und der Zyklenfreiheit auf der anderen Seite ergibt, ist in WO 2013/050149A1 ausführlich diskutiert, die auf einen Lösemittel unterstützten Stripp-Prozess zur Entfernung zyklischer Silikone aus silikonbasierten Produkten abstellt und hierbei insbesondere die Verwendung von Glyoxalacetalen wie Tetraethoxy- und Tetramethoxyethan als azeotropbildende Lösemittel zur destillativen Entfernung zyklischer Siloxane aus aminofunktionellen Siloxanen lehrt.

Erfindungsgemäß bevorzugt nimmt man die Aufreinigung der vorzugsweise gemäß EP3492513 A1 oder EP3611214 A1, EP3611216 A1 und EP3663346 A1 gewonnenen Acetoxysiloxane so vor, dass man entweder in das ggf. in einem inerten Löungsmittel gelöste, insbesondere trifluormethansulfonsaure, Acetanhydrid und ggf. Essigsäure enthaltende äquilibrierte, vorzugsweise endäquilibrierte Acetoxysiloxan Ammoniak einleitet, die Fällung, insbesondere umfassend Ammoniumtriflat und Ammoniumacetat und Acetamid, abfiltriert und dann das gewonnene Filtrat ggf. einer Destillation zur Abtrennung der Siloxancyclen (D₄/D₅/D₆) sowie des ggf. eingesetzten inerten Lösungsmittels unterwirft, oder dass man das ggf. in einem inerten Lösungsmittel gelöste, insbesondere trifluormethansulfonsaure, Acetanhydrid und ggf. Essigsäure enthaltende äquilibrierte, vorzugsweise endäquilibrierte Acetoxysiloxan mit einer festen und /oder flüssigen Base, bevorzugt mit einem Acetatsalz beaufschlagt, die Fällung, insbesondereTriflatfällung, abfiltriert und dann das gewonnene Filtrat gegebenfalls einer Destillation zur Abtrennung der Essigsäure, des Acetanhydrids, der Siloxancyclen (D₄/D₅/D₆) sowie des ggf. eingesetzten inerten Lösungsmittels unterwirft.

Der Gegenstand der Erfindung ist vor diesem Hintergrund ein Verfahren zur Aufreinigung von sauren, vorzugsweise supersauren, insbesondere trifluormethansulfonsauren, äquilibrierten, vorzugsweise endäquilibrierten Acetanhydrid enthaltenden Acetoxysiloxanen, bei welchen
(a) das ggf. in einem inerten Lösungsmittel gelöste, saure, vorzugsweise supersaure, insbesondere trifluormethansulfonsaure, Acetanhydrid und gebenenfalls Essigsäure enthaltende äquilibrierte, vorzugsweise endäquilibrierte Acetoxysiloxan mit einer Base beaufschlagt wird,
(b) die Fällung abfiltriert wird und
(c) das gewonnene Filtrat ggf. destillativ reinigt.

Mit dem Begriff "endäquilibriert" ist gemeint, dass das Äquilibriergleichgewicht erreicht worden, das sich bei einer Temperatur von 23°C und einem Druck von 1013,25 hPa einstellt. Als Indikator für das Erreichen des Äquilibriergleichgewichtes kann der gaschromatographisch bestimmte Gesamtcyclengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxypolydimethyl-siloxanen beziehungsweise nach der Derivatisierung der verzweigten Acetoxysiloxane zu den entsprechenden verzweigten Isopropoxysiloxanen herangezogen werden. Der Einsatz der Essigsäure ermöglicht hier die problemlose Unterschreitung sonst üblicher Gleichgewichtsanteile von etwa 13 Gewichtsprozent des Gesamtcyclen-gehaltes bei den linearen α,ω-Diacetoxypolydimethylsiloxanen und von etwa 8 Gewichtsprozent des Gesamtcyclengehaltes bei den verzweigten Acetoxysiloxanen. Demzufolge entspricht es einer bevorzugten Ausführungsform wenn Gleichgewichtsanteile des Gesamtcyclengehaltes von kleiner 13, vorzugsweise kleiner 12 Gewichtsprozent bei den linearen α,ω-Diacetoxypolydimethylsiloxanen, und Gleichgewichtsanteile des Gesamtcyclengehaltes von kleiner 8, vorzugsweise kleiner 7 Gewichtsprozent bei den verzweigten Acetoxysiloxanen unterschritten werden. Die Derivatisierung zu den α,ω-Diisopropoxypolydimethylsiloxanen beziehungsweise zu den verzweigten Isopropoxysiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxypolydimethylsiloxane beziehungsweise der verzweigten Acetoxysiloxane zu verhindern (zur Rückspaltungsreaktion siehe u.a. J. Pola et al.,Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Gemäß einer bevorzugten Ausführungsform der Erfindung wird in dem Schritt (a) als Base Ammoniak eingeleitet, hiernach wird die Fällung, insbesondere umfassend Ammoniumtriflat, Ammoniumacetat und Acetamid, abfiltriert, und dann wird das gewonnene Filtrat ggf. einer Destillation zur Abtrennung der Siloxancyclen (D₄/D₅/D₆) sowie des ggf. eingesetzten, inerten Lösungsmittels unterworfen, wobei die Behandlung des Siloxans mit Ammoniak vorzugsweise im Temperaturbereich von 0°C bis 50°C , bevorzugt zwischen 15°C bis 35°C durchgeführt wird.

Gemäß einer anderen bevorzugten Ausführungsform der Erfindung wird in dem Schritt (a) mit einer festen und/oder flüssigen Base, beaufschlagt, und hiernach wird die Fällung, die insbesondere immer Triflatsalze und Acetate sowie ggf. noch Acetamide sowie ggf. die im Überschuss eingesetzte feste Base enthält, abfiltriert, und dann wird das gewonnene Filtrat ggf. einer Destillation zur Abtrennung ggf. noch vorhandener Essigsäure sowie ggf. noch vorhandenen Acetanhydrids und der Siloxancyclen (D₄/D₅/D₆) sowie des ggf. eingesetzten inerten Lösungsmittels unterworfen, wobei die einzusetzende feste und/oder flüssige Base ein Hydrogencarbonat und/ oder Carbonat der Alkali- oder Erdalkalimetalle, hierbei auch ggf. in Form eines Hydrats und/oder eine organische Aminbase, umfassend primäre und/ oder sekundäre Amine und / oder tertiäre Amine , insbesondere auch Hydroxyalkylgruppen tragende Amine wie Diisopropanolamin und / oder Trisopropanolamin oder besonders bevorzugt ein Acetatsalz umfasst,wobei man die Behandlung des Siloxans mit einer festen und /oder flüssigen Base vorzugsweise im Temperaturbereich von 0°C bis 140°C, bevorzugt im Temperaturbereich von 20°C bis 110°C durchführt.

Erstaunlicherweise wurde gefunden, dass der nach Ammoniakeinleitung abgetrennte Salzkörper, insbesondere gemischte Ammoniumtriflat/ Ammoniumacetat/ Acetamid-Salzkörper, je nach den gewählten Fällungsbedingungen als grobes Salz und oftmals auch in Gestalt eines gut kristallisierten Kugelsalzes anfällt. Dieser morphologische Aspekt ist für die technische Umsetzung der Erfindung insofern von erheblicher Bedeutung, als dass er die filtrierende Trennung von der Flüssigkeit (geringer hydraulischer Druckverlust im Filterkuchen) gravierend erleichtert und zugleich die durch Anhaftung am Salzkörper zu verzeichnenden Verluste an Acetoxysiloxan minimiert.

Bei Ammoniakeinsatz bemisst sich die Mindestmenge an einzusetzendem Ammoniak insbesondere an der im endäquilibrierten Acetoxysiloxan vorhandenen summarischen Menge an Säure, insbesondere umfassend Trifluormethansulfonsäure und ggf. Essigsäure, sowie Acetanhydrid. Aus praktischen Erwägungen zur Absicherung der vollständigen Fällung wählt man jedoch vorteilhafterweise Überschüsse an Ammoniak bezogen auf die Gesamtmenge an Reaktanden, wobei man unter wirtschaftlichen als auch Entsorgungsaspekten den Ammoniak-Überschuss selbstverständlich nicht zu groß bemisst. Erfindungsgemäß bevorzugt setzt man den einfachen bis 10fachen stöchiometrischen Überschuss, besonders bevorzugt, den einfachen bis 5fachen stöchiometrischen Überschuss an Ammoniak ein.

Größere Überschüsse an Ammoniak und dann insbesondere kombiniert mit langen Reaktionszeiten und Temperaturen sind vorzugsweise zu vermeiden, da die Erfinder hierbei im ²⁹Si-NMR-Spektrum den Abbau sehr kurzer Acetoxygruppen-tragender Siloxane unter Verlängerung der mittleren Siloxankettenlänge, zuverlässig festzumachen zum Beispiel am Integrationsverhältnis von Acetoxyendgruppen zu D-Einheiten, gesehen haben.

So kann man zum Beispiel mit Hilfe der ²⁹Si-NMR-Spektroskopie in bei 22°C mit größeren Überschüssen von Ammoniak-beaufschlagten Proben endäquilibrierten, trifluormethansulfonsauren α,ω-Diacetoxpolydimethylsiloxans abhängig von der Einwirkzeit und der Reaktivitätsreihe folgend, zunächst das Verschwinden silanischer Acetoxykörper, wie z. B. Diacetoxdimethylsilan (N = 1), dann von α,ω-Diacetoxy-tetramethyldisiloxan (N = 2) und danach den Abbau von α,ω-Diacetoxy-hexamethyltrisiloxan (N = 3) und danach auch noch den Abbau der höheren Oligomeren beobachten.

Erfindungsgemäß bevorzugt nimmt man bei der Ausführungsvariante, die die Ammoniakeinleitung vorsieht, die Aufreinigung des sauren, vorzugsweise trifluormethansulfonsauren, Acetanhydrid und ggf. Essigsäure enthaltenden, äquilibrierten, vorzugsweise endäquilibrierten Acetoxysiloxans mit Ammoniak im Temperaturbereich von 0°C bis 50°C, bevorzugt zwischen 15°C bis 35°C vor.

Das nach Abfiltrieren des Mischsalzes gewonnene Acetoxysiloxan ist ein bei Ausschluss von Feuchtigkeit stabil zu lagerndes, reaktives Silikonintermediat, das sich unmittelbar zum Beispiel für die Weiterverarbeitung zu SiOC-verknüpften Polyethersiloxanen eignet.

Die erfindungsgemäß nach der Ausführungsvariante, die die Ammoniakeinleitung vorsieht, gewonnenen, von Säure und Essigsäureanhydrid befreiten linearen oder verzweigten Acetoxysiloxane besitzen verglichen mit den unbehandelten Ausgangsmaterialien eine verbesserte Lagerstabilität und zudem zeigen insbesondere die verzweigten Acetoxysiloxane bei Kontakt mit Wasser eine nur geringe Vergelungsneigung. Diesen letztgenannten Aspekt des erfindungsgemäß erzielten Stabilitätsgewinns kann man sehr einfach experimentell überprüfen, indem man kleine Volumina (zum Beispiel ca. 1 ml) unbehandelten respektive erfindungsgemäß behandelten verzweigten Acetoxysiloxans auf schwarze Bakelitdeckel aufbringt und dann mit wenig Millilitern destillierten Wassers versetzt. In Minutenschnelle erleidet das unbehandelte verzweigte Acetoxysiloxan vollständige Vergelung unter Bildung eines weißen Silikonnetzwerkes, während die Zeitachse einsetzender Vergelung bei dem im Vergleichsexperiment eingesetzten, erfindungsgemäß behandelten verzweigten Acetoxysiloxans deutlich gedehnt ist (mehr als 24 Stunden).

Den zuvor angesprochenen Aspekt der VOC-Freiheit adressierend, kann man wahlweise das erfindungsgemäß aufgereinigte Acetoxysiloxan jedoch auch noch einer nachgeschalteten Destillation unterziehen, um - wie bereits dargelegt - den Anteil einfacher Siloxancyclen (D₄/D₅/D₆) herabzusetzen sowie auch ein ggf. eingesetztes, inertes Lösungsmittel abzutrennen.

Erfindungsgemäß bevorzugt gelten solche Lösungsmittel für beide Ausführungsvarianten (Ammoniakeinleitung und Einsatz flüssiger oder fester Basen) als inert, die nicht zur Reaktion mit den in der Acetoxysiloxanmatrix vorhandenen Komponenten neigen, insbesondere Alkane, Cycloalkane, Aromaten und Alkylaromaten, hierbei insbesondere Toluol. Im Hinblick auf vermeidbaren Trennaufwand ist erfindungsgemäß jedoch die lösemittelfreie Aufreinigung von Acetoxysiloxanen besonders bevorzugt.

Gegenüber den ursprünglichen, insbesondere trifluormethansulfonsauren, Acetanhydrid und ggf. Essigsäure enthaltenden Acetoxysiloxanen ist der Essiggeruch der erfindungsgemäß aufgereinigten Acetoxysiloxane überaus deutlich geringer.

Die erfindungsgemäß bevorzugt nach der anderen Ausführungsvariante einzusetzende feste und/oder flüssige Base ist vorzugsweise ein Hydrogencarbonat und/oder Carbonat der Alkali-/oder Erdalkalimetalle, hierbei auch ggf. in Form eines Hydrats und/oder eine organische Aminbase umfassend primäre, sekundäre und tertiäre Amine, hierunter auch solche, die zum Beispiel eine Hydroxyalkylfunktion tragen wie zum Beispiel Diisopropanolamin oder Triisopropanolamin oder weiter bevorzugt ein Acetatsalz.

Gemäß einer bevorzugten Ausführungsform der Erfindung führt man die Behandlung des trifluormethansulfonsauren, äquilibrierten, vorzugsweise endäquilibrierten, Acetoxygruppen-tragenden Siloxans mit einer festen und/oder flüssigen Base im Temperaturbereich von 0°C bis 140°C, bevorzugt im Temperaturbereich von 20°C bis 110°C durch.

Die ideale Temperatur bei der Zugabe einer festen und/oder flüssigen Base ist naturgemäß auch geprägt von den physikochemischen Eigenschaften der festen und/oder flüssigen Base selbst. Im Falle des Einsatzes des erfindungsgemäß besonders bevorzugt einzusetzenden Kaliumacetats empfiehlt es sich, die Zugabetemperatur der Base oberhalb von 90°C, besser bei 100°C zu wählen, um eine gute Löslichkeit und damit Wirksamkeit des Kaliumacetats in dem trifluormethansulfonsauren, äquilibrierten, vorzugsweise endäquilibrierten, Acetoxygruppen-tragenden Siloxan sicherzustellen (Beispiel 5). Hier genügen dem Fachmann wenige orientierende Versuche, die jeweils optimale Zugabetemperatur zu bestimmen.

Erfindungsgemäß bevorzugt wird nach der Ausführungsvaniante, die den Einsatz einer festen und/oder flüssigen Base vorsieht, das ggf. in einem inerten Löungsmittel gelöste, trifluormethansulfonsaure, Acetanhydrid und ggf. Essigsäure enthaltende äquilibrierte, vorzugsweise endäquilibrierte Acetoxysiloxan mit einem Acetatsalz beaufschlagt.

Die Mindestmenge an erfindungsgemäß bevorzugt nach dieser Ausführungsvariante einzusetzenden festen und/oder flüssigen Base, bevorzugt eines Acetatsalzes, bemisst sich an der im äquilibrierten, vorzugsweise endäquilibrierten Acetoxysiloxan vorhandenen Menge an Säure, insbesondere Trifluormethansulfonsäure. Aus praktischen Erwägungen zur Absicherung der vollständigen Fällung wählt man jedoch stets Überschüsse fester und/oder flüssiger Base, bevorzugt eines Acetatsalzes, bezogen auf das Säure-Äquivalent, insbesondere Trifluormethansulfonsäure-Äquivalent. Erfindungsgemäß bevorzugt setzt man den einfachen bis 10fachen stöchiometrischen Überschuss, besonders bevorzugt den einfachen bis 5fachen stöchiometrischen Überschuss an fester und/oder flüssiger Base, bevorzugt eines Acetatsalzes, bezogen auf das Säure-Äquivalent, insbesondere Trifluormethansulfonsäure-Äquivalent ein.

Erfindungsgemäß bevorzugt werden als Acetatsalze die Acetate des Natriums, Kaliums, Magnesiums, Aluminiums eingesetzt. Besonders bevorzugt ist das Kaliumacetat.

Nach dem Einbringen der festen und/oder flüssigen Base, bevorzugt eines Acetatsalzes, bildet sich eine Triflatfällung, die man durch einfache Filtration abtrennen kann. Das nach Abfiltrieren gewonnene Acetoxysiloxan ist ein bei Ausschluss von Feuchtigkeit stabil zu lagerndes, reaktives Siloxanintermediat, das sich entweder unmittelbar z. B. für die Weiterverarbeitung zu SiOC-verknüpften Polyethersiloxanen eignet oder aber auch ggf. einer Destillation zur Abtrennung der Essigsäure, des Acetanhydrids, der Siloxancyclen (D₄/D₅/D₆) sowie des ggf. eingesetzten inerten Lösungsmittels unterworfen werden kann.

Alle erfindungsgemäß aufgereinigten Acetoxysiloxane lassen sich leicht durch Umsetzung mit Polyetherolen, respektive Polyetherdiolen zu den entsprechenden linearen bzw. verzweigten SiOC-Verknüpfungen tragenden Polyethersiloxanen weiterverarbeiten (Bsp. 4, 7 und 8).

### Beispiele

Die folgenden Beispiele dienen dem Fachmann allein zur Erläuterung dieser Erfindung und stellen keinerlei Beschränkung des beanspruchten Verfahrens dar. Die erfindungsgemäße Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die Gaschromatogramme werden an einem GC-Gerät des Typs GC 7890B der Fa. Agilent Technologies, ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcyclengehalt definiert als die Summe der D₄-, D₅-, D₆-Gehalte bezogen auf die Siloxanmatrix und festgestellt nach der Derivatisierung der α,ω-Acetoxypolydimethylsiloxane bzw. der verzweigten Acetoxysiloxane zu den entsprechenden α,ω-Diisopropoxy-polydimethylsiloxanen bzw. zu den entsprechenden, verzweigten Isopropoxysiloxanen herangezogen. Die Derivatisierung zu den Isopropoxysiloxanen wird hierbei bewusst gewählt, um eine unter den Bedingungen der gaschromatographischen Analyse ggf. erfolgende, thermisch induzierte Rückspaltungsreaktion der Acetoxy-siloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Die eingesetzten Polyetherole besitzen Wassergehalte von ca. 0,2 Massen-% und werden ohne weitere Vortrocknung verwendet. Eingesetztes Toluol respektive Alkylbenzol (C₁₀-C₁₃) besitzen einen Wassergehalt von 0,03 Massen-% und werden ebenfalls ohne Vortrocknung verwendet.

Die OH-Zahl der Polyetherole wird gemäß DGF C-V 17 a (53), bzw. gemäss Ph. Eur. 2.5.3 Method A bestimmt, wobei man zunächst die Hydroxylgruppen der zu analysierenden Probe mit Essigsäureanhydrid in Gegenwart von Pyridin acetyliert und dann im Rahmen einer Differenztitration (Blindprobe, Berücksichtigung des Acetanhydridüberschusses) die freigesetzte Essigsäure als Verbrauch KOH in mg pro Gramm Polyetherdiol titriert.

### Beispiel 1 (nichterfindungsgemäß)

### Herstellung eines zyklisch-verzweigten Siloxans mit einem angestrebten D-/ T-Verhältnis von 6 : 1

In einem 10-I-Vierhalsrundkolben mit KPG-Rührer und aufgesetztem Rückflusskühler werden 783 g (4,39 mol) Methyltriethoxysilan zusammen mit 978,7 g (2,64 mol) Dekamethylcyclopentasiloxan unter Rühren auf 60°C erwärmt, mit 2,98 g Trifluormethansulfonsäure beaufschlagt und für 4 Stunden äquilibriert. Dann werden 237 g Wasser sowie 59,3 g Ethanol hinzugefügt und der Ansatz wird für weitere 2 Stunden auf Rückflusstemperatur erhitzt. Man fügt 159,0 g Wasser sowie 978,8 g (2,64 mol) Dekamethylcyclopentasiloxan (D₅) hinzu und tauscht den Rückflusskühler gegen eine Destillationsbrücke aus und destilliert innerhalb der folgenden Stunde die bis 90°C flüchtigen Bestandteile ab. Man fügt dann dem Reaktionsansatz 3000 ml Toluol hinzu und destilliert bis zu einer Sumpftemperatur von 100°C am Wasserabscheider das noch im Stoffsystem befindliche Wasser ab. Man lässt den Reaktionsansatz auf ca. 60°C abkühlen, neutralisiert die Säure durch Zugabe von 60,0 g festen Natriumhydrogencarbonats und rührt dann zur vollständigen Neutralisation noch weitere 30 Minuten nach. Nach Abkühlen auf 25°C werden mit Hilfe eines Faltenfilters die Salze abgetrennt.

Bei 70°C und einem angelegten Hilfsvakuum von < 1mbar wird das als Lösungsmittel eingesetzte Toluol abdestilliert. Der Destillationssumpf ist eine farblose, leichtbewegliche Flüssigkeit deren ²⁹Si-NMR-Spektrum ein D-/T-Verhältnis von 6,18 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen tragen, ein Anteil von 0,52 Molprozent zu. Die gaschromatographische Analyse der Flüssigkeit weist außerdem einen Anteil von ca. 15 Gewichtsprozent an einfachen Siloxancyclen in Form von D₄, D₅ und D₆ nach. Das GPC weist eine breite Molmassenverteilung auf, gekennzeichnet durch Mw = 55258 g/ mol; Mn 1693 g/mol und Mw/ Mn = 32,63.

### Beispiel 2 (nichterfindungsgemäß)

### Herstellung eines Acetoxy-terminierten, verzweigten Siloxans mit 1,5% Essigsäure-Zusatz

In einem 1000-ml-Vierhalskolben mit KPG-Rührer, Innenthermometer und aufgesetztem Rückflusskühler werden 49,9 g (0,489 mol) Essigsäureanhydrid zusammen mit 268,1 g der in Beispiel 1 hergestellten DT-Zyklen (D/ T-Verhältnis nach ²⁹Si-NMR-Spektrum = 6,18 : 1, M = 525,42 g/mol und einem Anteil von SiOH/ SiOEt-Gruppierungen von 0,52 Mol-%) und 188,5 g Dekamethylcyclopentasiloxan (D₅) unter Rühren vorgelegt und mit 1,03 g (0,56 ml) Trifluormethansulfonsäure (0,2 Massen-% bezogen auf den Gesamtansatz) und 7,6 g Essigsäure (1,5% bezogen auf die Masse der Reaktanden) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 88,2 % bezogen auf eingesetztes Essigsäureanhydrid sowie das vollständige Verschwinden spektroskopisch erfassbarer Anteile an Si-Alkoxy- und SiOH- Gruppen belegt.

### Überführung des verzweigten Acetoxylsiloxans in das entsprechende verzweigte Isopropoxysiloxan zur analytischen Charakterisierung

Unmittelbar nach der Synthese werden 25,0 g dieses trifluormethansulfonsauren, äquilibrierten verzweigten Acetoxysiloxans in einem 100-ml-Vierhalsrundkolben ausgerüstet mit mit KPG-Rührer, Innenthermometer und aufgesetztem Rückflusskühler zusammen mit 5,8 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt. Isoliert wird eine farblos, klare Flüssigkeit deren begleitendes ²⁹Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D4 | D₅ | D₆ | Summe (D4 - D6) | Isopropanolgehalt |
|---|---|---|---|---|
| 2,5% | 1,6% | 0,6% | 4,7 % | 9,7 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 3 (erfindungsgemäß)

### Aufreinigung des in Beispiel 2 gewonnenen verzweigten Acetoxysiloxans

In einem 500-ml-Vierhalsrundkolben versehen mit einem KPG-Rührer, aufgesetzten Rückflusskühler, Innenthermometer und Gaseinleitungsrohr werden 150 g des in Beispiel 2 gewonnenen, trifluormethansulfonsauren verzweigten Acetoxysiloxans bei 23°C unter Rühren vorgelegt. Im Lauf von 30 Minuten werden etwa 3 I gasförmigen Ammoniaks (Rotameter) eingeleitet. Bereits nach 5 Minuten trübt sich die gerührte Flüssigphase durch die einsetzende Salzausfällung deutlich ein.

Nach beendeter Ammoniakeinleitung wird die Flüssigkeit mit Hilfe einer Filterpresse (Filterscheibe Seitz K 300) vom Niederschlag befreit. Der auf der Filterscheibe befindliche Salzkuchen besteht aus groben, leicht bräunlichen Kristallen. Man isoliert als Filtrat eine klare, farblose Flüssigkeit, die zur Beseitigung ggf. noch darin gelösten Ammoniaks für ca. 5 Minuten am Rotationsverdampfer einem Ölpumpenvakuum von etwa 1 mbar ausgesetzt wird.

Ein ²⁹Si-NMR-Spektrum belegt den strukturellen Erhalt des verzweigten, Acetoxygruppen tragenden Siloxans. Im Gegensatz zum unbehandelten Ausgangsmaterial resultiert eine ganz erheblich erhöhte Hydrolysestabilität, die sich z. B. darin zeigt, dass das aufgereinigte Material bei Kontakt mit Wasser eine allenfalls ganz geringe Vergelungsneigung besitzt. Im einfachen Handversuch kann man ca. 1 ml des erfindungsgemäß aufgereinigten, verzweigten Acetoxysiloxans mit einigen Tropfen Wasser auf einem schwarzen Bakelitdeckel kontaktieren. Hierbei bleibt die sonst in Minutenschnelle einsetzende Durchgelung des nicht aufgereinigten Materials (Bildung einer festen, weißen Gelschicht) aus.

### Beispiel 4 (erfindungsgemäß)

### Umsetzung des in Beispiel 3 gewonnenen, aufgereinigten verzweigten Acetoxysiloxans zu einem Polyethersiloxan (Polyurethanweichschaumstabilisator)

In einem 500-ml-Vierhalskolben mit KPG-Rührer, Innenthermometer und aufgesetztem Rückflusskühler werden 169,4 g eines Butanol-gestarteten Polyetherolgemisches (Propylenoxid-Anteil von 47 Massenprozent, Ethylenoxid-Anteil von 53 Massenprozent) mit einer durchschnittlichen Molmasse von 2200 g/ mol (individuelle Molmassen bestimmt nach jeweiliger OH-Zahl) in 200 ml Toluol unter Rühren vorgelegt und mit 40 g des in Beispiel 3 hergestellten, aufgereinigten verzweigten Acetoxysiloxans versetzt.

Die Reaktionsmischung wird für 30 Minuten unter fortwährendem Rühren auf 50°C erwärmt. Dann wird im Verlauf von weiteren 30 Minuten zunächst die zur Neutralisation benötigte Menge an gasförmigem Ammoniak in die Reaktionsmatrix eingeleitet. Im Verlauf weiterer 45 Minuten leitet man noch einen leichten Ammoniakstrom ein, so dass das Reaktionsgemisch deutlich alkalische Reaktion zeigt (feuchtes Indikatorpapier). Die ausgefallenen Salze werden über einen Doppelfaltenfilter von der toluolischen Phase abgetrennt.

Am Rotationsverdampfer bei 70°C Sumpftemperatur und einem angelegten Hilfsvakuum von 1 mbar wird das Rohprodukt destillativ von Toluol befreit. Man isoliert die nahezu farblose Zubereitung eines SIOC-verknüpften verzweigten Polyethersiloxans, dessen angestrebte Struktur durch ein ²⁹Si-NMR-Spektrum abgesichert wird.

### Beispiel 5 (erfindungsgemäß)

### Aufreinigung des in Beispiel 2 gewonnenen verzweigten Acetoxysiloxans

In einem 500-ml-Vierhalsrundkolben versehen mit einem KPG-Rührer, aufgesetzten Rückflusskühler, Innenthermometer und Gaseinleitungsrohr werden 150 g des in Beispiel 2 gewonnenen, trifluormethansulfonsauren verzweigten Acetoxysiloxans bei 100°C unter Rühren vorgelegt. Man fügt 0,3 g (0,004 mol) festen Kaliumacetats hinzu. Man lässt den Ansatz noch 30 Minuten bei 100°C nachrühren und danach auf eine Temperatur von ca. 35°C abkühlen

Darauf wird die Flüssigkeit mit Hilfe einer Filterpresse (Filterscheibe Seitz K 300) vom Niederschlag befreit. Der auf der Filterscheibe befindliche Salzkuchen besteht aus groben, nahezu farblosen Kristallen. Man isoliert als Filtrat eine farblose, klare Flüssigkeit.

Ein ²⁹Si-NMR-Spektrum belegt den strukturellen Erhalt des verzweigten, Acetoxygruppen tragenden Siloxans. Im Gegensatz zum unbehandelten Ausgangsmaterial eine deutlich erhöhte Hydrolysestabilität, die sich zum Beispiel darin zeigt, dass das aufgereinigte Material bei Kontakt mit Wasser eine nur geringe Vergelungsneigung besitzt. Im einfachen Handversuch kann man ca. 1 ml des erfindungsgemäß aufgereinigten, verzweigten Acetoxysiloxans mit einigen Tropfen Wasser auf einem schwarzen Bakelitdeckel kontaktieren. Hierbei bleibt die sonst in Minutenschnelle einsetzende Durchgelung des nicht aufgereinigten Materials (Bildung einer festen, weißen Gelschicht) aus.

### Destillation des Filtrats zur Entfernung von Essigsäure, Essigsäureanhydrid und Siloxanzyklen

Die einstündige Destillation erfolgte bei 130°C und einem angelegten Hilfsvakuum von ca. 1 mbar am Rotationsverdampfer. Der Destillationsrückstand wird weiterverwendet.

### Überführung des verzweigten Acetoxylsiloxans in das entsprechende verzweigte Isopropoxysiloxan zur analytischen Charakterisierung

25,0 g dieses destillativ aufgereinigten verzweigten Acetoxysiloxans werden in einem 100-ml-Vierhalsrundkolben ausgerüstet mit mit KPG-Rührer, Innenthermometer und aufgesetztem Rückflusskühler zusammen mit 5,8 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt. Isoliert wird eine farblos, klare Flüssigkeit deren begleitendes ²⁹Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D4 | D₅ | D₆ | Summe (D₄ - D₆) | Isopropanolgehalt |
|---|---|---|---|---|
| 0,28 % | 0,11 % | 0,05 % | 0,44% | 10,1 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 6

### Umsetzung des in Beispiel 5 gewonnenen, destillierten verzweigten Acetoxysiloxans zu einem Polyethersiloxan (Polyurethanweichschaumstabilisator)

In einem 500-ml-Vierhalskolben mit KPG-Rührer, Innenthermometer und aufgesetztem Rückflusskühler werden 169,4 g eines Butanol-gestarteten Polyetherolgemisches (Propylenoxid-Anteil von 47 Massenprozent, Ethylenoxid-Anteil von 53 Massenprozent) mit einer durchschnittlichen Molmasse von 2200 g/ mol (individuelle Molmassen bestimmt nach jeweiliger OH-Zahl) in 200 ml Toluol unter Rühren vorgelegt und mit 40 g des in Beispiel 5 destillierten, verzweigten Acetoxysiloxans versetzt.

Die Reaktionsmischung wird für 30 Minuten unter fortwährendem Rühren auf 50°C erwärmt. Dann wird im Verlauf von weiteren 30 Minuten zunächst die zur Neutralisation benötigte Menge an gasförmigem Ammoniak in die Reaktionsmatrix eingeleitet. Im Verlauf weiterer 45 Minuten leitet man noch einen leichten Ammoniakstrom ein, so dass das Reaktionsgemisch deutlich alkalische Reaktion zeigt (feuchtes Indikatorpapier).

Die ausgefallenen Salze werden über einen Doppelfaltenfilter von der toluolischen Phase abgetrennt. Am Rotationsverdampfer bei 70°C Sumpftemperatur und einem angelegten Hilfsvakuum von 1 mbar wird das Rohprodukt destillativ von Toluol befreit.

Man isoliert ein nahezu farbloses, SIOC-verknüpftes verzweigtes Polyethersiloxan, dessen angestrebte Struktur durch ein ²⁹Si-NMR-Spektrum abgesichert wird und dessen gaschromatographisch erfasste Gehalt an Siloxancyclen (D₄, D₅ und D₆) kleiner 0,08 Massenprozent ist.

### Beispiel 7 (nichterfindungsgemäß)

### Herstellung eines Acetoxy-terminierten, linearen Polydimethylsiloxans mit 1,5% Essigsäure-Zusatz

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) und 12,2 g Essigsäure (1,5 Gew.-% bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 93% bezogen auf eingesetztes Essigsäureanhydrid belegt entsprechend einem α,ω--Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxypolydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt. Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt. Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D4 | D₅ | D₆ | Summe (D₄ - D₆) | Isopropanolgehalt |
|---|---|---|---|---|
| 4,94 % | 4,04 % | 1,07 % | 10,05 % | 11,00 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 8 (erfindungsgemäß)

### Aufreinigung des in Beispiel 7 gewonnenen linearen Acetoxysiloxans

In einem 500-ml-Vierhalsrundkolben versehen mit einem KPG-Rührer, aufgesetzten Rückflusskühler, Innenthermometer und Gaseinleitungsrohr werden 310,4 g des in Beispiel 5 gewonnenen, trifluormethansulfonsauren linearen Acetoxysiloxans bei 23°C unter Rühren vorgelegt. Im Lauf von 30 Minuten werden etwa 3 I gasförmigen Ammoniaks (Rotameter) eingeleitet. Bereits nach 5 Minuten trübt sich die gerührte Flüssigphase durch die einsetzende Salzausfällung deutlich ein.

Nach beendeter Ammoniakeinleitung wird die Flüssigkeit mit Hilfe einer Filterpresse (Filterscheibe Seitz K 300) vom Niederschlag befreit. Der auf der Filterscheibe befindliche Salzkuchen besteht aus groben, leicht bräunlichen Kristallen. Man isoliert als Filtrat eine farblose, klare Flüssigkeit, die zur Beseitigung ggf. noch darin gelösten Ammoniaks für ca. 5 Minuten am Rotationsverdampfer einem Ölpumpenvakuum von etwa 1 mbar ausgesetzt wird.

Ein ²⁹Si-NMR-Spektrum belegt den strukturellen Erhalt des linearen, α,ω-Acetoxygruppen tragenden Siloxans.

### Beispiel 9 (erfindungsgemäß)

Umsetzung des in Beispiel 8 gewonnenen, aufgereinigten linearen Acetoxysiloxans zu einem SiOC-verknüpften, linearen Polydimethylsiloxan-Polyoxyalkylen-Blockcopolymers des Strukturtyps ABA in Toluol mit Ammoniak als Hilfsbase

In einem 500-ml-Vierhalskolben mit KPG-Rührer, Innenthermometer und aufgesetztem Rückflusskühler werden 96,0 g eines Butanol-gestarteten Polypropylenoxygruppen enthaltenden Polyetherols der mittleren Molmasse 1935 g/ mol (bestimmt nach OH-Zahl) zusammen mit 126 ml Toluol unter Rühren vorgelegt. Dann werden 30,0 g des im Beispiel 6 hergestellten, aufgereinigten Acetoxy-terminierten, linearen Siloxans hinzugegeben. Bereits nach 5 minütigem Verrühren bei 23°C ist die Reaktionsmatrix klar. Mit Hilfe eines Einleitrohres wird Im Verlauf von 45 Minuten gasförmiger Ammoniak in mäßigem Strom in die weiter gerührte Reaktionsmatrix eingeleitet, bis ein an feuchtem Universalindikatorpapier vollzogener Tüpfeltest deutlich alkalische Reaktion signalisiert.

Im Verlauf weiter 45 Minuten wird ein reduzierter Ammoniakstrom eingeleitet und die Reaktionsmischung auf 50°C erwärmt. Die Gaseinleitung wird beendet und man lässt den Ansatz auf 23°C erkalten bevor man die darin befindlichen Salze mit Hilfe eines Faltenfilters von der Flüssigkeit abtrennt. Das so gewonnene, klare Filtrat wird bei 70°C Badtemperatur und einem angelegten Hilfsvakuum von < 1 mbar am Rotationsverdampfer von Flüchtigen befreit.

Man isoliert ein farblos, klares ABA-strukturiertes Polydimethylsiloxan-Polyoxyalkylen-Blockcopolymer, dessen ²⁹Si-NMR-Spektrum die angestrebte Struktur absichert. Zum Zwecke der Endstabilisierung wird das Polyethersiloxan noch mit 0,2 % N-Methylmorpholin versetzt.

## Patentansprüche

1. Verfahren zur Aufreinigung von sauren, vorzugsweise supersauren, insbesondere trifluormethansulfonsauren, äquilibrierten, vorzugsweise endäquilibrierten, Acetanhydrid enthaltenden Acetoxysiloxanen, **dadurch gekennzeichnet, dass**
(a) das ggf. in einem inerten Löungsmittel gelöste, saure, vorzugsweise supersaure, insbesondere trifluormethansulfonsaure, Acetanhydrid und ggf. Essigsäure enthaltende äquilibrierte, vorzugsweise endäquilibrierte Acetoxysiloxan mit einer Base beaufschlagt wird,
(b) die Fällung abfiltriert wird und
(c) das gewonnene Filtrat ggf. destillativ reinigt.

2. Verfahren nach Anspruch 1, **dadurch gekennzeichnet, dass** in dem Schritt (a) als Base Ammoniak eingeleitet wird,
und danach die Fällung, insbesondere umfassend Ammoniumtriflat, Ammoniumacetat und Acetamid, abfiltriert wird, und dann das gewonnene Filtrat ggf. einer Destillation zur Abtrennung der Siloxancyclen (insbesondere umfassend D₄, D₅, D₆) sowie des ggf. eingesetzten inerten Lösungsmittels unterworfen wird,
wobei die Behandlung des Siloxans mit Ammoniak vorzugsweise im Temperaturbereich von 0°C bis 50°C, bevorzugt zwischen 15°C bis 35°C durchgeführt wird,
wobei man vorteilhafterweise den einfachen bis 10fachen stöchiometrischen Überschuss an Ammoniak, besonders bevorzugt den einfachen bis 5fachen stöchiometrischen Überschuss an Ammoniak, bezogen auf die im äquilibrierten, vorzugsweise endäquilibrierten Acetoxysiloxan vorhandene summarische Menge an Säure, insbesondere umfassend Trifluormethansulfonsäure sowie ggf. Essigsäure, und Acetanhydrid einsetzt.

3. Verfahren nach Anspruch 1, **dadurch gekennzeichnet, dass** in dem Schritt (a) mit einer festen und/oder flüssigen Base, beaufschlagt wird, und danach die Fällung, insbesondere umfassend Trifluormethansulfonatsalze, abfiltriert wird, und dann das gewonnene Filtrat ggf. einer Destillation, insbesondere zur Abtrennung der Essigsäure, des Acetanhydrids, der Siloxancyclen (insbesondere umfassend D₄, D₅, D₆) sowie des ggf. eingesetzten inerten Lösungsmittels unterworfen wird,
wobei die einzusetzende feste und/oder flüssige Base ein Hydrogencarbonat und/ oder Carbonat der Alkali- oder Erdalkalimetalle, hierbei auch ggf. in Form eines Hydrats und/oder eine organische Aminbase, umfassend primäre und/ oder sekundäre Amine und / oder tertiäre Amine , insbesondere auch Hydroxyalkylgruppen tragende Amine wie Diisopropanolamin und / oder Trisopropanolamin oder besonders bevorzugt ein Acetatsalz umfasst,
wobei man die Behandlung des Siloxans mit einer festen und /oder flüssigen Base vorzugsweise im Temperaturbereich von 0°C bis 140°C, bevorzugt im Temperaturbereich von 20°C bis 110°C durchführt, wobei man vorteilhafterweise den einfachen bis 10fachen stöchiometrischen Überschuss an fester und/oder flüssiger Base, besonders bevorzugt den einfachen bis 5fachen stöchiometrischen Überschuss an fester und/oder flüssiger Base bezogen auf das zu neutralisierende Säure-Äquivalent, insbesondere Trifluormethansulfonsäure-Äquivalent, einsetzt.

4. Verfahren gemäß zumindest einem der Ansprüche 1 bis 3, **dadurch gekennzeichnet, dass** die aufzureinigenden Acetoxygruppen-tragenden Siloxane, aus zyklischen Siloxanen, insbesondere umfassend D₄ und/oder D₅ und/ oder aus Hydroxygruppen tragenden Siloxanen und/ oder aus Mischungen zyklisch-verzweigter Siloxane vom D/T-Typ unter Einsatz von Säure, vorzugsweise Supersäure, insbesondere von Trifluormethansulfonsäure als Katalysator mit Acetanhydrid und unter Zusatz von Essigsäure
oder
dass die aufzureinigenden linearen oder verzweigten Acetoxyfunktionen tragenden Siloxane in einem Reaktionssystem umfassend
a) Alkoxygruppen tragende Silane und/oder Siloxane und/oder
b) Acetoxygruppen tragende Silane und/oder Siloxane, und/oder
c) Hydroxygruppen tragende Silane und/oder Siloxane,
d) gegebenenfalls einfache Siloxanzyklen und/oder DT-Zyklen,
e) ein Reaktionsmedium, umfassend Essigsäureanhydrid, Perfluoralkansulfonsäure
(insbesondere Trifluormethansulfonsaure) sowie vorzugsweise Essigsäure.
hergestellt sind.

5. Verfahren gemäß zumindest einem der Ansprüche 1 bis 4, **dadurch gekennzeichnet, dass** das aufzureinigende Acetoxygruppen-tragende Siloxan Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf das aufzureinigende Acetoxygruppen-tragende Siloxan enthält.

6. Verfahren gemäß zumindest einem der Ansprüche 1 bis 5, **dadurch gekennzeichnet, dass** das aufzureinigende Acetoxygruppen-tragende Siloxan aus Mischungen zyklischer-verzweigter Siloxane vom D/T-Typ hergestellt ist,
wobei bevorzugt ist, dass die Mischungen zyklischer-verzweigter Siloxane vom D/T-Typ vorzugsweise ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und diese Mischungen bevorzugt zumindest 5 Gewichtsprozent Siloxancyclen, wie vorzugsweise Oktamethylcyclotetrasiloxan (D₄), Dekamethylcyclopentasiloxan (D₅) und/oder deren Mischungen enthalten,
oder wobei bevorzugt ist, dass das aufzureinigende Acetoxygruppen-tragende Siloxan aus Mischungen zyklischer-verzweigter, vorzugsweise ausschließlich D- und T-Einheiten aufweisender Siloxane deren mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, größer 2 und kleiner 10 Molprozent sind, hergestellt ist.

7. Verfahren nach zumindest einem der Ansprüche 1 bis 5, **dadurch gekennzeichnet, dass** die aufzureinigenden sauren, vorzugsweise supersauren, insbesondere trifluormethansulfonsauren, äquilibrierten, vorzugsweise endäquilibrierten linearen α,ω-Acetoxygruppen-tragenden Siloxane, Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden linearen α,ω-Isopropoxysiloxanen von kleiner 13, vorzugsweise kleiner 12 Gewichtsprozent aufweisen.

8. Verfahren nach zumindest einem der Ansprüche 1 bis 6, **dadurch gekennzeichnet, dass** die aufzureinigenden sauren, vorzugsweise supersauren, insbesondere trifluormethansulfonsauren, äquilibrierten, vorzugsweise endäquilibrierten verzweigten Acetoxygruppen-tragenden Siloxanen, Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden verzweigten Isopropoxysiloxanen von kleiner 8, vorzugsweise kleiner 7 Gewichtsprozent aufweisen.

9. Verfahren nach zumindest einem der Ansprüche 1 bis 8, **dadurch gekennzeichnet, dass** die aufzureinigenden, Acetoxygruppen-tragenden Siloxane Supersäure, insbesondere Trifluormethansulfonsäure, in Mengen von 0,1 bis 1,0 Massenprozent, bevorzugt 0,1 bis 0,3 Massenprozent, enthalten.

10. Verfahren nach zumindest einem der Ansprüche 1 bis 9, **dadurch gekennzeichnet, dass** man als inertes Lösemittel Alkane, Cycloalkane, Aromaten und Alkylaromaten, hierbei insbesondere Toluol einsetzt.

11. Verfahren nach zumindest einem der Ansprüche 1 bis 10, **dadurch gekennzeichnet, dass** man lösemittelfrei verfährt.

12. Endäquilibrierte lineare α,ω-Acetoxygruppen-tragende Siloxane hergestellt nach einem Verfahren gemäß zumindest einem der Ansprüche 1 bis 5, 7 9 bis 11, **dadurch gekennzeichnet, dass** sie Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden linearen α,ω-Isopropoxysiloxanen von kleiner 13, vorzugsweise kleiner 12 Gewichtsprozent aufweisen.

13. Endäquilibrierte verzweigte Acetoxygruppen-tragende Siloxane hergestellt nach einem Verfahren gemäß zumindest einem Ansprüche 1 bis 6 sowie 8 bis 12, **dadurch gekennzeichnet, dass** sie Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden verzweigten Isopropoxysiloxanen von kleiner 8, vorzugsweise kleiner 7 Gewichtsprozent aufweisen.

14. Verwendung der aufgereinigten, endäquilibrierten Acetoxygruppen-tragenden Siloxane nach Anspruch 12 oder Anspruch 13 als Ausgangsmaterialien für die Herstellung von SiOC-verknüpften Polyethersiloxanen für deren Einsatz in PU-Schaumstabilisatoren, in Entschäumern, in Dismulgatoren, in Emulgatoren und in Lack- und Verlaufsadditiven.

## Claims

1. Process for purifying acidic, preferably superacidic, in particular trifluoromethanesulfonic acid-acidified, equilibrated, preferably end-equilibrated, acetic anhydride-containing acetoxysiloxanes, **characterized in that**
(a) the acidic, preferably superacidic, in particular trifluoromethanesulfonic acid-acidified, acetic anhydride-containing and optionally acetic acid-containing equilibrated, preferably end-equilibrated acetoxysiloxane, which is optionally dissolved in an inert solvent, is contacted with a base,
(b) the precipitate is filtered off and
(c) the filtrate obtained is optionally purified by distillation.

2. Process according to Claim 1, **characterized in that** in step (a) the base introduced is ammonia,
and thereafter the precipitate, in particular comprising ammonium triflate, ammonium acetate and acetamide, is filtered off, and then the filtrate obtained is optionally subjected to distillation in order to remove the siloxane cycles (in particular comprising D₄, D₅, D₆) and also any inert solvent used,
wherein the treatment of the siloxane with ammonia is preferably conducted in the temperature range from 0°C to 50°C, preferably between 15°C to 35°C,
wherein advantageously a one- to 10-fold stoichiometric excess of ammonia, particularly preferably a one- to 5-fold stoichiometric excess of ammonia, is used based on the cumulative amount of acid, in particular comprising trifluoromethanesulfonic acid and optionally acetic acid, and acetic anhydride present in the equilibrated, preferably end-equilibrated, acetoxysiloxane.

3. Process according to Claim 1, **characterized in that** in step (a) contact is made with a solid and/or liquid base, and thereafter the precipitate, in particular comprising trifluoromethanesulfonate salts, is filtered off, and then the filtrate obtained is optionally subjected to distillation, in particular in order to remove the acetic acid, the acetic anhydride, the siloxane cycles (in particular comprising D₄, D₅, D₆) and also any inert solvent used,
wherein the solid and/or liquid base to be used comprises a hydrogencarbonate and/or carbonate of the alkali or alkaline earth metals, in this case possibly also in the form of a hydrate, and/or an organic amine base, comprising primary and/or secondary amines and/or tertiary amines, in particular also hydroxyalkyl group-bearing amines such as diisopropanolamine and/or triisopropanolamine or particularly preferably an acetate salt,
wherein the treatment of the siloxane with a solid and/or liquid base is preferably conducted in the temperature range from 0°C to 140°C, preferably in the temperature range from 20°C to 110°C,
wherein advantageously a one- to 10-fold stoichiometric excess of solid and/or liquid base, particularly preferably a one- to 5-fold stoichiometric excess of solid and/or liquid base, is used based on the acid equivalent, in particular trifluoromethanesulfonic acid equivalent, to be neutralized.

4. Process according to at least one of Claims 1 to 3, **characterized in that** the acetoxy group-bearing siloxanes to be purified have been prepared from cyclic siloxanes, in particular comprising D₄ and/or D₅, and/or from hydroxy group-bearing siloxanes and/or from mixtures of cyclic branched siloxanes of the D/T type using acid, preferably superacid, in particular trifluoromethanesulfonic acid as catalyst with acetic anhydride and with the addition of acetic acid
or
**in that** the linear or branched, acetoxy function-bearing siloxanes to be purified have been prepared in a reaction system comprising
a) silanes and/or siloxanes bearing alkoxy groups, and/or
b) silanes and/or siloxanes bearing acetoxy groups, and/or
c) silanes and/or siloxanes bearing hydroxy groups,
d) optionally simple siloxane cycles and/or DT cycles,
e) a reaction medium comprising acetic anhydride, perfluoroalkanesulfonic acid
(in particular trifluoromethanesulfonic acid) and also preferably acetic acid.

5. Process according to at least one of Claims 1 to 4, **characterized in that** the acetoxy group-bearing siloxane to be purified contains acetic acid in amounts of 0.4 to 3.5 per cent by weight, with preference 0.5 to 3 per cent by weight, preferably 0.8 to 1.8 per cent by weight, particularly preferably in amounts of 1.0 to 1.5 per cent by weight based on the acetoxy group-bearing siloxane to be purified.

6. Process according to at least one of Claims 1 to 5, **characterized in that** the acetoxy group-bearing siloxane to be purified has been prepared from mixtures of cyclic branched siloxanes of the D/T type,
wherein it is preferable for the mixtures of cyclic branched siloxanes of the D/T type to consist preferably exclusively of siloxanes having D and T units and for their cumulative proportion of the D and T units present in the siloxane matrix and having Si-alkoxy and/or SiOH groups, determinable by ²⁹Si NMR spectroscopy, to be ≤ 2 mole per cent, preferably less than 1 mole per cent, and for these mixtures to preferably contain at least 5 per cent by weight of siloxane cycles, such as preferably octamethylcyclotetrasiloxane (D₄), decamethylcyclopentasiloxane (D₅) and/or mixtures of these, or wherein it is preferable for the acetoxy group-bearing siloxane to be purified to have been prepared from mixtures of cyclic branched siloxanes having preferably exclusively D and T units and whose cumulative proportion of the D and T units present in the siloxane matrix and having Si-alkoxy and/or SiOH groups, determinable by ²⁹Si NMR spectroscopy, is greater than 2 and less than 10 mole per cent.

7. Process according to at least one of Claims 1 to 5, **characterized in that** the acidic, preferably superacidic, in particular trifluoromethanesulfonic acid-acidified, equilibrated, preferably end-equilibrated linear α,ω-acetoxy group-bearing siloxanes to be purified have total cycles contents, defined as the sum total of the content fractions of the cyclic siloxanes comprising D₄, D₅ and D₆, based on the siloxane matrix and determined by gas chromatography after their derivatization to give the corresponding linear α,ω-isopropoxysiloxanes, of less than 13, preferably less than 12 per cent by weight.

8. Process according to at least one of Claims 1 to 6, **characterized in that** the acidic, preferably superacidic, in particular trifluoromethanesulfonic acid-acidified, equilibrated, preferably end-equilibrated branched acetoxy group-bearing siloxanes to be purified have total cycles contents, defined as the sum total of the content fractions of the cyclic siloxanes comprising D₄, D₅ and D₆, based on the siloxane matrix and determined by gas chromatography after their derivatization to give the corresponding branched isopropoxysiloxanes, of less than 8, preferably less than 7 per cent by weight.

9. Process according to at least one of Claims 1 to 8, **characterized in that** the acetoxy group-bearing siloxanes to be purified contain superacid, in particular trifluoromethanesulfonic acid, in amounts of 0.1 to 1.0 per cent by mass, preferably 0.1 to 0.3 per cent by mass.

10. Process according to at least one of Claims 1 to 9, **characterized in that** the inert solvent used is alkanes, cycloalkanes, aromatics and alkylaromatics, here in particular toluene.

11. Process according to at least one of Claims 1 to 10, **characterized in that** the procedure is effected solventlessly.

12. End-equilibrated linear α,ω-acetoxy group-bearing siloxanes prepared by a process according to at least one of Claims 1 to 5, 7, 9 to 11, **characterized in that** they have total cycles contents, defined as the sum total of the content fractions of the cyclic siloxanes comprising D₄, D₅ and D₆, based on the siloxane matrix and determined by gas chromatography after their derivatization to give the corresponding linear α,ω-isopropoxysiloxanes, of less than 13, preferably less than 12 per cent by weight.

13. End-equilibrated branched acetoxy group-bearing siloxanes prepared by a process according to at least one of Claims 1 to 6 and 8 to 12, **characterized in that** they have total cycles contents, defined as the sum total of the content fractions of the cyclic siloxanes comprising D₄, D₅ and D₆, based on the siloxane matrix and determined by gas chromatography after their derivatization to give the corresponding branched isopropoxysiloxanes, of less than 8, preferably less than 7 per cent by weight.

14. Use of the purified, end-equilibrated acetoxy group-bearing siloxanes according to Claim 12 or Claim 13 as starting materials for the preparation of SiOC-bonded polyethersiloxanes for use thereof in PU foam stabilizers, in defoamers, in demulsifiers, in emulsifiers and in paint and levelling additives.

## Revendications

1. Procédé pour la purification d'acétoxysiloxanes acides, de préférence superacides, en particulier acide trifluorométhanesulfonique, équilibrés, de préférence à extrémités équilibrées, contenant de l'anhydride acétique, **caractérisé en ce que**
(a) l'acétoxysiloxane acide, de préférence superacide, en particulier acide trifluorométhanesulfonique, équilibré, de préférence à extrémités équilibrées, contenant de l'anhydride acétique et le cas échéant de l'acide acétique, dissous dans un solvant inerte est additionné d'une base,
(b) le précipité est séparé par filtration et
(c) le filtrat obtenu est le cas échéant purifié par distillation.

2. Procédé selon la revendication 1, **caractérisé en ce que**, dans l'étape (a), de l'ammoniac est introduit comme base,
et le précipité, comprenant en particulier du triflate d'ammonium, de l'acétate d'ammonium et de l'acétamide, est ensuite séparé par filtration et le filtrat obtenu est ensuite le cas échéant soumis à une distillation pour la séparation des cycles de siloxane (comprenant en particulier D₄, D₅, D₆) ainsi que du solvant inerte le cas échéant utilisé,
le traitement du siloxane par l'ammoniac étant de préférence réalisé dans une plage de température de 0°C à 50°C, de préférence de 15°C à 35°C,
où on utilise avantageusement un excès d'ammoniac représentant une à 10 fois la quantité stoechiométrique, de manière particulièrement préférée un excès d'ammoniac représentant une à 5 fois la quantité stoechiométrique, par rapport à la quantité sous forme de somme d'acide présente dans l'acétoxysiloxane équilibré, de préférence à extrémités équilibrées, comprenant en particulier de l'acide trifluorométhanesulfonique ainsi que le cas échéant de l'acide acétique, et de l'anhydride acétique.

3. Procédé selon la revendication 1, **caractérisé en ce qu'**on ajoute, dans l'étape (a), une base solide et/ou liquide et le précipité, comprenant en particulier des sels de trifluorométhanesulfonate, est ensuite éliminé par filtration et le filtrat obtenu est ensuite le cas échéant soumis à une distillation, en particulier pour la séparation de l'acide acétique, de l'anhydride acétique, des cycles de siloxane (comprenant en particulier D₄, D₅, D₆) ainsi que du solvant inerte le cas échéant utilisé,
la base solide et/ou liquide à utiliser comprenant un hydrogénocarbonate et/ou un carbonate des métaux alcalins ou alcalino-terreux, également le cas échéant sous forme d'un hydrate et/ou d'une base d'amine organique, comprenant les aminés primaires et/ou secondaires et/ou tertiaires, en particulier également les aminés portant des groupes hydroxyalkyle telles que la diisopropanolamine et/ou la triisopropanolamine ou de manière particulièrement préférée un sel d'acétate,
le traitement du siloxane à l'aide d'une base solide et/ou liquide étant de préférence réalisé dans la plage de température de 0°C à 140°C, de préférence dans la plage de température de 20°C à 110°C,
où on utilise avantageusement un excès représentant une à 10 fois la quantité stoechiométrique de base solide et/ou liquide, de manière particulièrement préférée un excès représentant une à 5 fois la quantité stoechiométrique de base solide et/ou liquide par rapport à l'équivalent d'acide à neutraliser, en particulier l'équivalent d'acide trifluorométhanesulfonique.

4. Procédé selon au moins l'une quelconque des revendications 1 à 3, **caractérisé en ce que** les siloxanes portant des groupes acétoxy à purifier sont préparés à partir de siloxanes cycliques, comprenant en particulier D₄ et/ou D₅ et/ou à partir de siloxanes portant des groupes hydroxy et/ou à partir de mélanges de siloxanes cycliques-ramifiés du type D/T avec utilisation d'un acide, en particulier d'un superacide, en particulier d'acide trifluorométhanesulfonique comme catalyseur avec de l'anhydride acétique et avec utilisation d'acide acétique
ou **en ce que** les siloxanes linéaires ou ramifiés, portant des fonctions acétoxy à purifier sont préparés dans un système de réaction comprenant
a) des silanes et/ou des siloxanes portant des groupes alcoxy et/ou
b) des silanes et/ou des siloxanes portant des groupes acétoxy et/ou
c) des silanes et/ou des siloxanes portant des groupes hydroxy,
d) le cas échéant des cycles siloxane simples et/ou des cycles DT,
e) un milieu de réaction, comprenant de l'anhydride de l'acide acétique, de l'acide perfluoroalcanesulfonique (en particulier de l'acide trifluorométhanesulfonique) ainsi que de préférence de l'acide acétique.

5. Procédé selon au moins l'une quelconque des revendications 1 à 4, **caractérisé en ce que** le siloxane portant des groupes acétoxy à purifier contient de l'acide acétique en des quantités de 0,4 à 3,5% en poids, de préférence de 0,5 à 3% en poids, de préférence de 0,8 à 1,8% en poids, de manière particulièrement préférée en des quantités de 1,0 à 1,5% en poids, par rapport au siloxane portant des groupes acétoxy à purifier.

6. Procédé selon au moins l'une quelconque des revendications 1 à 5, **caractérisé en ce que** le siloxane portant des groupes acétoxy à purifier est préparé à partir de mélanges de siloxanes cycliques-ramifiés du type D/T,
où on préfère que les mélanges de siloxanes cycliques-ramifiés du type D/T soient de préférence constitués exclusivement de siloxanes présentant des motifs D et T, dont la proportion sous forme de somme, déterminée par spectroscopie ²⁹Si-RMN, des motifs D et T présents dans la matrice de siloxane, qui présentent des groupes Si-alcoxy et/ou SiOH, est ≤ 2% en mole, de préférence inférieure à 1% en mole et que ces mélanges contiennent de préférence au moins 5% en poids de cycles siloxane, tels que de préférence 1'octaméthylcyclotétrasiloxane (D₄), le décaméthylcyclopentasiloxane (D₅) et/ou leurs mélanges,
ou alors où on préfère que le siloxane portant des groupes acétoxy à purifier soit préparé à partir de mélanges de siloxanes cycliques-ramifiés, présentant de préférence exclusivement des motifs D et T, dont la proportion sous forme de somme, déterminée par spectroscopie ²⁹Si-RMN, des motifs D et T présents dans la matrice de siloxane, qui présentent des groupes Si-alcoxy et/ou SiOH, est supérieure à 2 et inférieure à 10% en mole.

7. Procédé selon au moins l'une quelconque des revendications 1 à 5, **caractérisé en ce que** les siloxanes linéaires portant des groupes α,ω-acétoxy, acides, de préférence superacides, en particulier acide trifluorométhanesulfonique, équilibrés, de préférence à extrémités équilibrées, à purifier présentent des teneurs totales en cycles, définies comme la somme des proportions des siloxanes cycliques comprenant D₄, D₅ et D₆, par rapport à la matrice de siloxane et déterminées par chromatographie en phase gazeuse après leur dérivation en α,ω-isopropoxysiloxanes linéaires correspondants, inférieures à 13, de préférence inférieures à 12% en poids.

8. Procédé selon au moins l'une quelconque des revendications 1 à 6, **caractérisé en ce que** les siloxanes ramifiés portant des groupes acétoxy, acides, de préférence superacides, en particulier acide trifluorométhanesulfonique, équilibrés, de préférence à extrémités équilibrées, à purifier présentent des teneurs totales en cycles, définies comme la somme des proportions des siloxanes cycliques comprenant D₄, D₅ et D₆, par rapport à la matrice de siloxane et déterminées par chromatographie en phase gazeuse après leur dérivation en isopropoxysiloxanes ramifiés correspondants, inférieures à 8, de préférence inférieures à 7% en poids.

9. Procédé selon au moins l'une quelconque des revendications 1 à 8, **caractérisé en ce que** les siloxanes portant des groupes acétoxy à purifier contiennent un superacide, en particulier de l'acide trifluorométhanesulfonique, en des quantités de 0,1 à 1,0% en masse, de préférence de 0,1 à 0,3% en masse.

10. Procédé selon au moins l'une quelconque des revendications 1 à 9, **caractérisé en ce qu'**on utilise, comme solvant inerte, des alcanes, des cycloalcanes, des aromatiques et des alkylaromatiques, en particulier du toluène.

11. Procédé selon au moins l'une quelconque des revendications 1 à 10, **caractérisé en ce qu'**on procède sans solvant.

12. Siloxanes linéaires portant des groupes α,ω-acétoxy, à extrémités équilibrées, préparés selon un procédé selon au moins l'une quelconque des revendications 1 à 5, 7, 9 à 11, **caractérisés en ce qu'**ils présentent des teneurs totales en cycles, définies comme la somme des proportions des siloxanes cycliques comprenant D₄, D₅ et D₆, par rapport à la matrice de siloxane et déterminées par chromatographie en phase gazeuse après leur dérivation en α,ω-isopropoxysiloxanes linéaires correspondants, inférieures à 13, de préférence inférieures à 12% en poids.

13. Siloxanes ramifiés portant des groupes acétoxy, à extrémités équilibrées, préparés selon un procédé selon au moins l'une quelconque des revendications 1 à 6 ainsi que 8 à 12, **caractérisés en ce qu'**ils présentent des teneurs totales en cycles, définies comme la somme des proportions des siloxanes cycliques comprenant D₄, D₅ et D₆, par rapport à la matrice de siloxane et déterminées par chromatographie en phase gazeuse après leur dérivation en isopropoxysiloxanes ramifiés correspondants, inférieures à 8, de préférence inférieures à 7% en poids.

14. Utilisation des siloxanes portant des groupes acétoxy, à extrémités équilibrées, purifiés, selon la revendication 12 ou la revendication 13 comme matières premières pour la préparation de polyéthersiloxanes liés par SiOC pour leur utilisation dans des stabilisants de mousse de PU, dans des antimousses, dans des désémulsifiants, dans des émulsifiants et dans des additifs pour vernis et d'écoulement.
